(19) Europäisches Patentamt
European Patent Office
Office européen des brevets

(11) **EP 3 016 454 B1**

(12) **FASCICULE DE BREVET EUROPEEN**

(45) Date de publication et mention
de la délivrance du brevet:
**26.06.2019 Bulletin 2019/26**

(51) Int Cl.:
***H04W 56/00*** *(2009.01)*     *H04L 12/28* *(2006.01)*
*G08B 26/00* *(2006.01)*     *G08B 29/14* *(2006.01)*

(21) Numéro de dépôt: **15191655.8**

(22) Date de dépôt: **27.10.2015**

(54) **PROCÉDÉ DE GESTION, PAR UN DISPOSITIF CENTRALISÉ, DE L'ACCÈS À UNE RESSOURCE RADIO PAR AU MOINS UN PÉRIPHÉRIQUE**

**STEUERUNGSVERFAHREN ÜBER EINE ZENTRALISIERTE VORRICHTUNG DES ZUGANGS ZU EINER FUNKQUELLE DURCH MINDESTENS EIN PERIPHERIEGERÄT**

**METHOD FOR MANAGING, BY A CENTRALISED DEVICE, ACCESS TO A RADIO RESOURCE BY AT LEAST ONE PERIPHERAL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2014 FR 1460373**

(43) Date de publication de la demande:
**04.05.2016 Bulletin 2016/18**

(73) Titulaire: **Delta Dore**
**35270 Bonnemain (FR)**

(72) Inventeurs:
• **TURMEL, Eric**
**35270 BONNEMAIN (FR)**
• **ROUXEL, Yann**
**35270 BONNEMAIN (FR)**
• **BERHAULT, Gilles**
**35270 BONNEMAIN (FR)**

(74) Mandataire: **Cabinet Le Guen Maillet**
**3, impasse de la Vigie**
**CS 71840**
**35418 Saint-Malo Cedex (FR)**

(56) Documents cités:
**GB-A- 2 466 335**     **US-A1- 2004 076 186**
**US-A1- 2010 202 327**     **US-A1- 2010 265 931**
**US-B1- 6 771 614**

• **SPADACINI M ET AL: "Wireless networks for smart surveillance: Technologies, protocol design and experiments", WIRELESS COMMUNICATIONS AND NETWORKING CONFERENCE WORKSHOPS (WCNCW), 2012 IEEE, IEEE, 1 avril 2012 (2012-04-01), pages 214-219, XP032185787, DOI: 10.1109/WCNCW.2012.6215493 ISBN: 978-1-4673-0681-2**
• **"IEC 62642-5-3 Alarm systems - Intrusion and hold-up systems - Part 5-3: Interconnections - Requirements for equipment using radio frequency techniques", IEC, 1 octobre 2010 (2010-10-01), pages 1-64, XP055198128,**

**Description**

La présente invention concerne un procédé et un dispositif de gestion, par un dispositif centralisé, de l'accès à une ressource radio par au moins un périphérique.

Certains systèmes d'alarme anti intrusion sont conformes à des normes qui définissent certaines obligations de fonctionnement de celles-ci. Par exemple, la norme EN 50131-5-3 définit des exigences pour les équipements d'alarme intrusion utilisant des techniques radio.

Entre autres, cette norme définit une durée maximale de non réception d'un message radio d'un périphérique, durée maximale de deux heures. Si un périphérique n'envoie pas un message radio à une centrale d'alarme, la centrale d'alarme doit signaler un défaut de supervision à l'utilisateur du système d'alarme.

Cette norme impose qu'une centrale d'alarme, lorsqu'elle ne reçoit pas au moins un message radio d'au moins un périphérique dans un laps de temps de vingt minutes avant une surveillance, doit refuser une commande de mise en surveillance de celle-ci.

L'alimentation électrique des périphériques est bien souvent assurée par des piles ou des batteries qui ont une capacité à fournir de l'énergie électrique limitée. Il est donc important de veiller à ce que la consommation en énergie électrique des périphériques soit la plus faible possible de manière à accroître la longévité des piles ou des batteries.

De plus, il est nécessaire de coordonner l'envoi de messages par des périphériques de manière à éviter toute éventuelle collision de deux messages sur le médium radio. Les collisions génèrent des pertes d'informations car les messages ne peuvent être correctement interprétés par la centrale d'alarme, ne pas être reçus et provoquer des défauts de supervision, des refus de mise en surveillance et provoquer une consommation inutile d'énergie électrique par les périphériques.

La demande de brevet US 2010/202327 divulgue un procédé de gestion, par un dispositif centralisé, de l'accès à une ressource radio par au moins un périphérique.

Le brevet US 771 614 divulgue le transfert de messages périodiquement comprenant des marqueurs temporels utilisés pour ajuster une horloge interne.

La présente invention a pour but de résoudre les inconvénients de l'art antérieur en proposant un procédé et un dispositif de gestion, par un dispositif centralisé, de l'accès à une ressource radio par au moins un périphérique qui respecte les exigences normatives, limite le trafic sur le médium radio, évite d'éventuelles collisions et garantisse une consommation réduite en énergie électrique des périphériques.

A cette fin, selon un premier aspect, l'invention propose un procédé de gestion, par un dispositif centralisé, de l'accès à une ressource radio par au moins un périphérique, le dispositif centralisé et ledit au moins un périphérique étant des éléments d'un système de surveillance, le dispositif centralisé devant recevoir au moins un message de chaque périphérique dans un premier intervalle de temps prédéterminé et devant recevoir au moins un message d'au moins un périphérique dans un second intervalle de temps préalablement à la mise en surveillance du système de surveillance, le second intervalle de temps étant inférieur au premier intervalle de temps, caractérisé en ce que le procédé comporte les étapes de :

- détermination, pour chaque périphérique, de l'instant où le périphérique doit envoyer un message au dispositif centralisé à partir des premier, second intervalles de temps prédéterminés et du nombre de périphériques,
- à la réception de chaque périphérique d'un message, détermination d'un nouvel instant où le périphérique doit envoyer un message au dispositif centralisé à partir du l'instant de réception du message et de l'instant où le périphérique devait envoyer un message au dispositif centralisé,
- transfert du nouvel instant où le périphérique doit envoyer un message au dispositif centralisé au périphérique ayant envoyé le message reçu.

La présente invention concerne aussi un dispositif centralisé de gestion de l'accès à une ressource radio par au moins un périphérique, le dispositif centralisé et ledit au moins un périphérique étant des éléments d'un système de surveillance, le dispositif centralisé devant recevoir au moins un message de chaque périphérique dans un premier intervalle de temps prédéterminé et devant recevoir au moins un message d'au moins un périphérique dans un second intervalle de temps préalablement à la mise en surveillance du système de surveillance, le second intervalle de temps étant inférieur au premier intervalle de temps, caractérisé en ce que le dispositif centralisé comporte :

- des moyens de détermination, pour chaque périphérique, de l'instant où le périphérique doit envoyer un message au dispositif centralisé à partir des premier, second intervalles de temps prédéterminés et du nombre de périphériques,
- des moyens de détermination, à la réception de chaque périphérique d'un message, d'un nouvel instant où le périphérique doit envoyer un message au dispositif centralisé à partir du l'instant de réception du message et de l'instant où le périphérique devait envoyer un message au dispositif centralisé,

- des moyens de transfert du nouvel instant où le périphérique doit envoyer un message au dispositif centralisé au périphérique ayant envoyé le message reçu.

Ainsi, la présente invention respecte les exigences normatives, limite le trafic sur le médium radio, évite d'éventuelles collisions, garantit une consommation réduite en énergie électrique des périphériques que ce soit lors de la mise en service d'un périphérique, le retrait d'un périphérique ou lors du fonctionnement du système de surveillance avec un nombre de périphériques donné.

Selon un mode particulier de l'invention, le procédé comporte en outre l'étape de comparaison de l'écart entre l'instant de réception du message et de l'instant où le périphérique devait envoyer un message au dispositif centralisé à un seuil prédéterminé et représentatif de l'imprécision des oscillateurs internes des périphériques et le nouvel instant où le périphérique doit envoyer un message au dispositif centralisé est déterminé en fonction du résultat de la comparaison.

Ainsi, il est possible de choisir des oscillateurs internes des périphériques imprécis et moins coûteux que des oscillateurs plus précis tout en garantissant un fonctionnement correct du système.

Selon un mode particulier de l'invention, si l'écart est supérieur au seuil prédéterminé et si l'instant de réception du message est antérieur à l'instant où le périphérique devait envoyer un message au dispositif centralisé, le nouvel instant où le périphérique doit envoyer un message au dispositif centralisé est déterminé selon la formule suivante :
Tempo= t3-t3re où Tempo représente le temps entre l'instant d'envoi du message reçu et le nouvel instant où le périphérique doit envoyer un message au dispositif centralisé, t3re est l'instant de réception du message et t3 est l'instant où le périphérique devait envoyer un message au dispositif centralisé.

Ainsi, la présente invention est adaptée à toute nouvelle mise en service d'un ou plusieurs périphériques.

Selon un mode particulier de l'invention, si l'écart est supérieur au seuil prédéterminé et si l'instant de réception du message est postérieur à l'instant où le périphérique devait envoyer un message au dispositif centralisé, le nouvel instant où le périphérique doit envoyer un message au dispositif centralisé est déterminé selon la formule suivante :

$$\text{Tempo}= t3+\left\lceil\frac{t3re-t3}{Interv}\right\rceil*\text{Interv- }t3re$$

où $\lceil x\rceil$ est la partie entière par excès de x, t3re est l'instant de réception du message, t3 est l'instant où le périphérique devait envoyer un message au dispositif centralisé et Interv est l'intervalle de temps entre la réception de deux messages envoyés par le périphérique ayant envoyé le message au dispositif centralisé.

Ainsi, la présente invention est adaptée à toute nouvelle mise en service d'un ou plusieurs périphériques.

Selon un mode particulier de l'invention, si l'écart est inférieur au seuil prédéterminé, le nouvel instant où le périphérique doit envoyer un message au dispositif centralisé est déterminé selon la formule suivante :
Tempo=(t3+Interv-t3re)*(1+(t3-t3re)/Interv) où t3re est l'instant de réception du message, t3 est l'instant où le périphérique devait envoyer un message au dispositif centralisé et Interv est l'intervalle de temps entre la réception de deux messages envoyés par le périphérique ayant envoyé le message au dispositif centralisé.

Ainsi, la présente invention corrige les imprécisions des oscillateurs internes des périphériques. Il est possible de choisir des oscillateurs internes des périphériques imprécis et moins coûteux que des oscillateurs plus précis tout en garantissant un fonctionnement correct du système.

Selon un mode particulier de l'invention, le nombre de périphériques est comparé à au moins un seuil prédéterminé parmi trois seuils prédéterminés, et un mode de calcul différent est utilisé pour déterminer l'instant où le périphérique doit envoyer un message au dispositif centralisé selon le résultat de la comparaison du nombre de périphériques au seuil.

Ainsi, la présente invention est simple à implémenter

Selon un mode particulier de l'invention, un premier seuil égal à un, un second seuil égal à cinq et un troisième seuil égal à dix.

Selon un mode particulier de l'invention, le premier intervalle de temps prédéterminé est de deux heures et le second intervalle de temps est de vingt minutes.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un système de gestion, par un dispositif centralisé, de l'accès à une ressource radio par au moins un périphérique selon la présente invention;
la Fig. 2 représente un exemple d'architecture d'un dispositif centralisé;

la Fig. 3 représente un exemple d'architecture d'un périphérique selon la présente invention ;

la Fig. 4 représente un exemple d'algorithme, exécuté par un dispositif centralisé, de gestion de l'accès à une ressource radio par au moins un périphérique selon la présente invention ;

la Fig. 5 représente un exemple d'algorithme exécuté par un périphérique pour accéder à une ressource radio ;

les Figs. 6 représentent différents chronogrammes d'accès à la ressource radio.

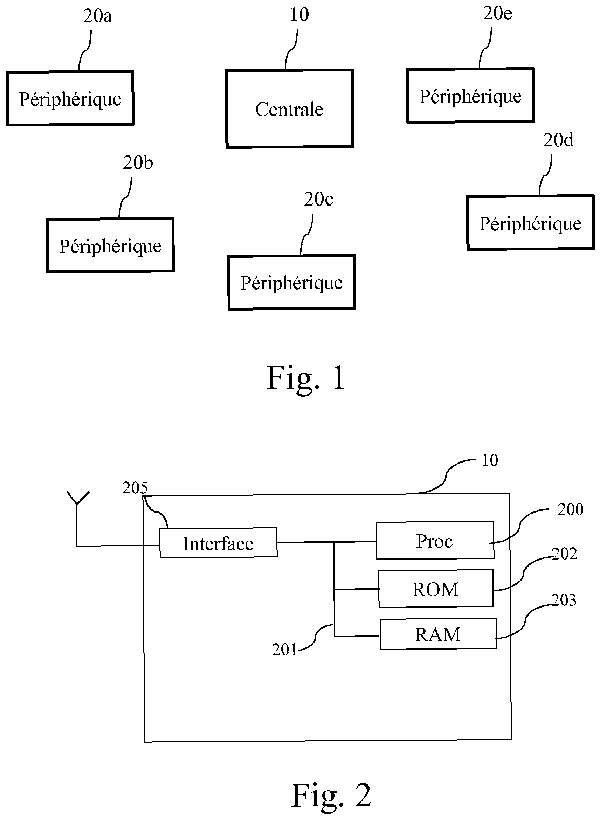

La **Fig. 1** représente un système de gestion, par un dispositif centralisé, de l'accès à une ressource radio par au moins un périphérique selon la présente invention.

Le système comporte un dispositif centralisé 10 qui gère l'accès à une ressource radio par une pluralité de périphériques notés 20a à 20e. Le dispositif centralisé 10 est par exemple une centrale d'alarme apte à gérer ou non un système domotique.

Les périphériques 10 sont par exemple des détecteurs d'ouvertures ou périmétriques pour les portes et fenêtres, des détecteurs de mouvements, des sirènes, des claviers, des écrans, des transmetteurs...

Les périphériques sont des dispositifs fonctionnant sur batterie dont il convient d'économiser leur consommation électrique pour garantir une longévité accrue de la batterie.

Le dispositif centralisé 10 est par exemple conforme à la norme EN 50131-5-3 qui définit les exigences pour les équipements d'alarme intrusion utilisant des techniques radio. Cette norme définit une durée maximale de non réception d'un message radio d'un périphérique, durée maximale de deux heures et la nécessité de recevoir, d'au moins un périphérique, un message radio dans les vingt minutes précédant la mise en surveillance du système d'alarme.

Dans la Fig. 1, cinq périphériques sont représentés. Le système peut comporter un nombre réduit ou plus important de périphériques. Par exemple, le dispositif centralisé 10 est apte à gérer de un à cinquante périphériques.

Selon la présente invention, le dispositif centralisé :

- détermine, pour chaque périphérique, l'instant où le périphérique doit envoyer un message au dispositif centralisé à partir des premier, second intervalles de temps prédéterminés et du nombre de périphériques,
- détermine, à la réception de chaque périphérique d'un message, un nouvel instant où le périphérique doit envoyer un message au dispositif centralisé à partir de l'instant de réception du message et de l'instant où le périphérique devait envoyer un message au dispositif centralisé,
- transfère le nouvel instant où le périphérique doit envoyer un message au dispositif centralisé au périphérique ayant envoyé le message reçu.

La **Fig. 2** représente un exemple d'architecture d'un dispositif centralisé.

Le dispositif centralisé 10 comprend :

- un processeur, micro-processeur, ou microcontrôleur 200 ;
- une mémoire volatile 203 ;
- une mémoire non volatile 202;
- une interface radio 205 bidirectionnelle ;
- un bus de communication reliant le processeur 200 à la mémoire ROM 203, à la mémoire RAM 203 et à l'interface radio 205.

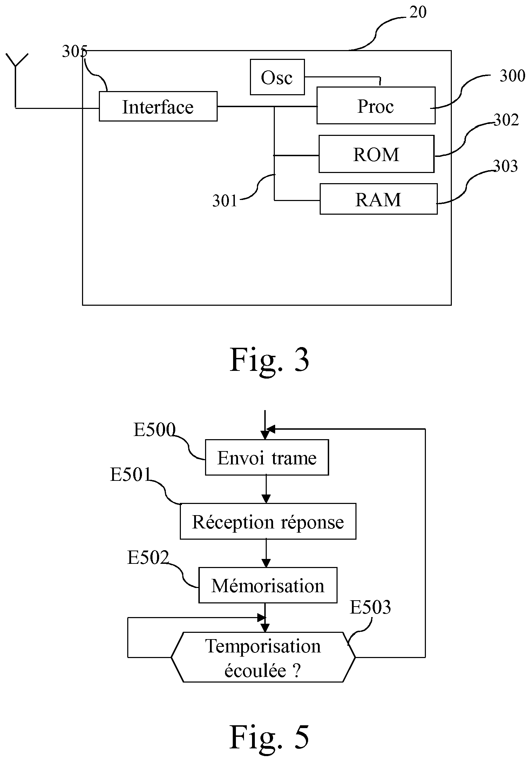

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif centralisé 10 est mis sous tension, le processeur 200 est capable de lire de la mémoire volatile 203 des instructions et de les exécuter. Ces instructions forment un programme d'ordinateur qui cause la mise en oeuvre, par le processeur 200, de tout ou partie du procédé décrit en relation avec la Fig. 4.

Tout ou partie du procédé décrit en relation avec la Fig. 4 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 3** représente un exemple d'architecture d'un périphérique selon la présente invention.

Le périphérique 20 comprend :

- un processeur, micro-processeur, ou microcontrôleur 300 ;
- une mémoire volatile 303 ;

- une mémoire non volatile 302;
- une interface radio 205 bidirectionnelle ;
- un bus de communication reliant le processeur 300 à la mémoire ROM 303, à la mémoire RAM 303, au lecteur de médium de stockage 304 et au dispositif de numérisation d'un document 305.

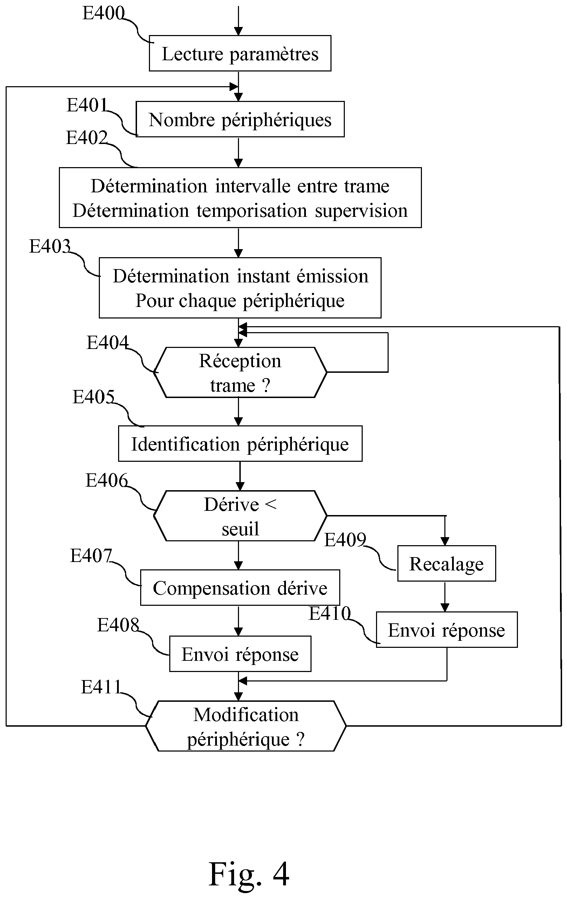

Le processeur 300 est cadencé par un oscillateur Osc et est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque le périphérique 20 est mis sous tension, le processeur 300 est capable de lire de la mémoire volatile 303 des instructions et de les exécuter. Ces instructions forment un programme d'ordinateur qui cause la mise en oeuvre, par le processeur 300, de tout ou partie du procédé décrit en relation avec la Fig. 5.

Tout ou partie du procédé décrit en relation avec la Fig. 5 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

La **Fig. 4** représente un exemple d'algorithme, exécuté par un dispositif centralisé, de gestion de l'accès à une ressource radio par au moins un périphérique selon la présente invention.

Plus précisément, le présent algorithme est exécuté par le processeur 200 du dispositif centralisé 10.

A l'étape E400, le processeur 200 lit dans la mémoire 203, la durée maximale de non réception d'un message radio de chaque périphérique, par exemple égale à deux heures et la durée maximale, par exemple de vingt minutes, de non réception d'au moins un périphérique d'un message radio.

A l'étape suivante E401, le processeur 200 détermine le nombre de périphériques 10 gérés par le dispositif centralisé 10. Lors de l'installation d'un périphérique 20, l'installateur enregistre le périphérique dans la liste mémorisée dans la mémoire vive 203. Le processeur 200 détermine le nombre de périphériques 10 gérés par le dispositif centralisé 10 en comptant les périphériques enregistrés dans la liste.

A l'étape suivante E402, le processeur 200 détermine l'intervalle de temps entre la réception de deux messages par le dispositif centralisé 10 ainsi que la temporisation que chaque périphérique 20 géré devra appliquer entre deux envois de messages au dispositif centralisé.

Par exemple, lorsqu'un seul périphérique est géré par le dispositif centralisé 10, l'intervalle de temps entre la réception de deux messages par le dispositif centralisé 10 est de 20 minutes et la temporisation que chaque périphérique 20 géré devra appliquer entre deux envois de messages au dispositif centralisé est de 20mn.

Par exemple, lorsque deux à dix périphériques sont gérés par le dispositif centralisé 10, l'intervalle de temps entre la réception de deux messages par le dispositif centralisé 10 est de 10 minutes. La temporisation Tempo, exprimée en mn,que chaque périphérique 20 géré devra appliquer entre deux envois de messages au dispositif centralisé est déterminée selon la formule suivante :
Tempo= Nbr*10 où Nbr est le nombre de périphériques gérés par le dispositif centralisé 10.

Par exemple, lorsque onze à cinquante périphériques sont gérés par le dispositif centralisé 10, l'intervalle de temps Interv, exprimé en mn, entre la réception de deux messages par le dispositif centralisé 10 est déterminé selon la formule suivante :
Interv= 100/Nbr.La temporisation Tempo que chaque périphérique 20 géré devra appliquer entre deux envois de messages au dispositif centralisé est égale à cent minutes.

Dans un mode particulier de la présente invention, le processeur 200 prend en compte une tolérance liée à l'horloge interne Osc des périphériques. Lorsque l'horloge interne des périphériques est peu précise, par exemple a une imprécision de +/- cinq pourcents, le processeur 200 applique un coefficient correctif à l'intervalle déterminé et à la temporisation.

Selon le mode particulier, lorsqu'un seul périphérique est géré par le dispositif centralisé 10, l'intervalle de temps entre la réception de deux messages par le dispositif centralisé 10 est de 20*0,95 minutes et la temporisation que chaque périphérique 20 géré devra appliquer entre deux envois de messages au dispositif centralisé est de 20*0,95 minutes.

Selon le mode particulier, lorsque deux à dix périphériques sont gérés par le dispositif centralisé 10, l'intervalle de temps entre la réception de deux messages par le dispositif centralisé 10 est de 10*0.95 minutes. La temporisation Tempo, exprimée en mn que chaque périphérique 20 géré devra appliquer entre deux envois de messages au dispositif centralisé est déterminée selon la formule suivante :
Tempo= Nbr*10*0.95 où Nbr est le nombre de périphériques gérés par le dispositif centralisé 10.

Selon le mode particulier, lorsque onze à cinquante périphériques sont gérés par le dispositif centralisé 10, l'intervalle de temps Interv, exprimé en mn, entre la réception de deux messages par le dispositif centralisé 10 est déterminé selon la formule suivante :

$$Interv= 100*0.95/Nbr.$$

La temporisation Tempo que chaque périphérique 20 géré devra appliquer entre deux envois de messages au dispositif centralisé est égale à 100*0.95 minutes.

A l'étape suivante E403, le processeur 200 détermine l'instant d'émission d'un message pour chaque périphérique géré.

Par exemple, le processeur 200 détermine selon l'ordre dans la liste des périphériques gérés, l'instant auquel chaque périphérique devra envoyer un message au dispositif centralisé.

Par exemple, si cinq périphériques sont gérés et la tolérance des oscillateurs est de 5%, Interv= 570 secondes et Tempo= 2850 secondes.

Le premier périphérique dans la liste devra envoyer un message dans un délai de t1=0 seconde et appliquer la temporisation de 2850 secondes jusqu'à l'envoi du message suivant.

L'instant correspondant à t1=0 secondes correspond par exemple à l'instant de la mise sous tension du dispositif centralisé 10.

Le second périphérique dans la liste devra envoyer un message dans un délai de t2=570 secondes et appliquer la temporisation de 2850 secondes jusqu'à l'envoi du message suivant.

Le troisième périphérique dans la liste devra envoyer un message dans un délai de t3=1140 secondes et appliquer la temporisation de 2850 secondes jusqu'à l'envoi du message suivant.

Le quatrième périphérique dans la liste devra envoyer un message dans un délai de t4=1710 secondes et appliquer la temporisation de 2850 secondes jusqu'à l'envoi du message suivant.

Le cinquième périphérique dans la liste devra envoyer un message dans un délai de t5=2280 secondes et appliquer la temporisation de 2850 secondes jusqu'à l'envoi du message suivant.

A l'étape suivante E404, le processeur 200 vérifie si un message est reçu d'un périphérique 20 par l'intermédiaire de l'interface radio 205.

Si un message est reçu, le processeur 200 passe à l'étape E405. Dans la négative, le processeur 200 retourne à l'étape E404.

A l'étape E404, le processeur 200 identifie le périphérique 20 qui a envoyé le message reçu à partir du contenu du message reçu.

Par exemple, le message est reçu du troisième périphérique à l'instant t3re= t1+672 secondes. Il est à remarquer ici que lorsqu'un périphérique est installé et géré par le dispositif centralisé, le périphérique envoie un message au dispositif centralisé sans attendre aucun message du dispositif centralisé. Par la suite, le périphérique enverra les messages suivants selon la temporisation indiquée par le dispositif centralisé dans le message de réponse.

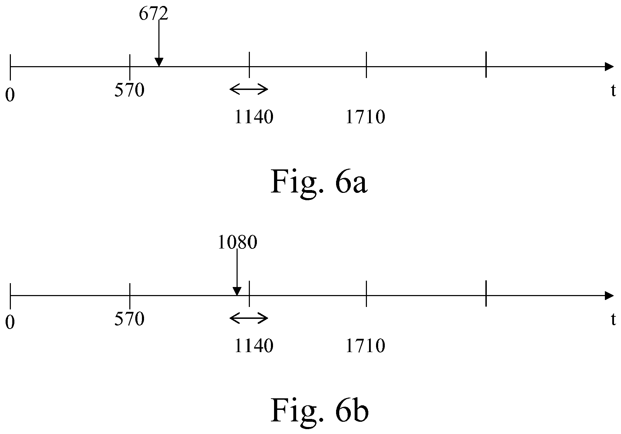

Un chronogramme de l'exemple est donné en référence à la Fig. 6a.

La **Fig. 6a** représente un chronogramme d'accès à la ressource radio.

L'axe des abscisses représente le temps. La marque 0 correspond à l'instant t1 auquel un message du premier périphérique doit être reçu, la marque 570 correspond à l'instant t2 auquel un message du second périphérique doit être reçu, la marque 1140 correspond à l'instant t3 auquel un message du troisième périphérique doit être reçu, la marque 1140 correspond à l'instant auquel un message du quatrième périphérique doit être reçu.

La marque 672 correspond à l'instant t3re auquel le message du troisième périphérique est reçu.

A l'étape suivante E405, le processeur 200 vérifie si l'instant de réception du message correspond à celui déterminé à l'étape E403.

Si l'instant de réception du message correspond à celui déterminé à l'étape E403 ou est dans la plage d'imprécision de l'horloge interne des périphériques, le processeur 200 passe à l'étape E407. Dans la négative, le processeur 200 passe à l'étape E409.

Le message étant reçu du troisième périphérique à l'instant t3re=t0+672 secondes et non au bout de t3=1140 secondes, le processeur 200 passe à l'étape E409.

A l'étape E409, le processeur 200 effectue une synchronisation du périphérique ayant envoyé le message.

Pour cela, le processeur 200 vérifie si l'instant de réception du message est antérieur à l'instant déterminé à l'étape E403. Dans l'affirmative, le processeur 200 synchronise le périphérique ayant envoyé le message selon la formule suivante :

$$Tempo= t3-t3re.$$

Dans la négative, le processeur 200 synchronise le périphérique ayant envoyé le message selon la formule suivante :

$$\text{Tempo}= t3+\left\lceil\frac{t3re-t3}{Interv}\right\rceil*\text{Interv}- t3re \quad \text{où } \lceil x \rceil \text{ est la partie entière par excès de } x.$$

A l'étape E410, le processeur 200 transfère en réponse au message reçu, par exemple dans un délai de vingt millisecondes, un acquittement au troisième périphérique lui indiquant une temporisation de 468 secondes jusqu'à l'envoi du message suivant.

Il est à remarquer ici que le troisième périphérique, lorsqu'il enverra un nouveau message à l'échéance de la temporisation de 468 secondes, recevra un message de réponse comprenant une valeur de temporisation égale à 2820 secondes éventuellement corrigée de l'imprécision de l'horloge interne des périphériques.

A l'étape suivante E411, le processeur 200 vérifie si le nombre de périphériques compris dans la liste est modifié. Dans la négative, le processeur 200 retourne à l'étape E404. Dans l'affirmative, le processeur 200 retourne à l'étape E401.

A l'étape E409, le processeur 200 détermine une compensation liée à l'imprécision de l'oscillateur interne du périphérique ayant envoyé le message.

Par exemple, le message est reçu du troisième périphérique à l'instant t3re= t1+1080 secondes.

Un chronogramme de l'exemple est donné en référence à la Fig. 6b.

La **Fig. 6b** représente un chronogramme d'accès à la ressource radio.

L'axe des abscisses représente le temps. La marque 0 correspond à l'instant t1 auquel un message du premier périphérique doit être reçu, la marque 570 correspond à l'instant t2 auquel un message du second périphérique doit être reçu, la marque 1140 correspond à l'instant t3 auquel un message du troisième périphérique doit être reçu, la marque 1140 correspond à l'instant auquel un message du quatrième périphérique doit être reçu.

La marque 1080 correspond à l'instant t3re auquel le message du troisième périphérique est reçu.

Le processeur 200 détermine une compensation liée à l'imprécision de l'oscillateur interne du périphérique ayant envoyé le message de la manière suivante :

$$\text{Tempo}=(t3+\text{Interv}-t3re)*(1+(t3-t3re)/\text{Interv}).$$

Soit selon l'exemple de la Fig. 6b, Tempo=2887 secondes.

A l'étape E408, le processeur 200 transfère en réponse au message reçu, par exemple dans un délai de vingt millisecondes, un acquittement au troisième périphérique lui indiquant une temporisation de 468 secondes jusqu'à l'envoi du message suivant. Cette opération effectuée, le processeur 200 passe à l'étape suivante E411.

La **Fig. 5** représente un exemple d'algorithme exécuté par un périphérique pour accéder à une ressource radio.

Plus précisément, le présent algorithme est exécuté par le processeur 300 de chaque périphérique 20.

A l'étape E500, le processeur 300 commande le transfert par l'intermédiaire de l'interface radio 305 d'un message au dispositif centralisé. Le message comprend entre autres un identifiant du périphérique 20.

A l'étape suivante E501, le processeur 300 détecte la réception d'un message reçu du dispositif centralisé 10 par l'intermédiaire de l'interface radio 305.

A l'étape suivante E502, le processeur 300 active une temporisation avec la valeur de la temporisation Tempo contenue dans le message reçu et met l'interface radio 205 dans un mode non actif.

A l'étape suivante E503, le processeur 300 vérifie si la temporisation est écoulée.

Dans l'affirmative, le processeur 300 retourne à l'étape E500. Dans la négative, le processeur 300 retourne à l'étape E503.

Bien entendu, la présente invention n'est nullement limitée aux modes de réalisation décrits ici, mais englobe, bien au contraire, toute variante à la portée de l'homme du métier.

**Revendications**

1. Procédé de gestion, par un dispositif centralisé, de l'accès à une ressource radio par au moins un périphérique, le dispositif centralisé et ledit au moins un périphérique étant des éléments d'un système de surveillance, le dispositif centralisé devant recevoir au moins un message de chaque périphérique dans un premier intervalle de temps prédéterminé et devant recevoir au moins un message d'au moins un périphérique dans un second intervalle de temps préalablement à la mise en surveillance du système de surveillance, le second intervalle de temps étant inférieur au premier intervalle de temps, **caractérisé en ce que** le procédé comporte les étapes de :

- détermination (E403), pour chaque périphérique, de l'instant où le périphérique doit envoyer un message au dispositif centralisé à partir des premier, second intervalles de temps prédéterminés et du nombre de périphériques,
- à la réception (E404) de chaque périphérique d'un message, détermination d'un nouvel instant où le périphérique doit envoyer un message au dispositif centralisé à partir de l'instant de réception du message et de l'instant où le périphérique devait envoyer un message au dispositif centralisé,
- transfert (E408, E410) du nouvel instant où le périphérique doit envoyer un message au dispositif centralisé au périphérique ayant envoyé le message reçu.

2. Procédé selon la revendication 1, **caractérisé en ce que** le procédé comporte en outre l'étape de comparaison de l'écart entre l'instant de réception du message et de l'instant où le périphérique devait envoyer un message au dispositif centralisé à un seuil prédéterminé et représentatif de l'imprécision des oscillateurs internes des périphériques et **en ce que** le nouvel instant où le périphérique doit envoyer un message au dispositif centralisé est déterminé en fonction du résultat de la comparaison.

3. Procédé selon la revendication 2, **caractérisé en ce que**, si l'écart est supérieur au seuil prédéterminé et si l'instant de réception du message est antérieur à l'instant où le périphérique devait envoyer un message au dispositif centralisé, le nouvel instant où le périphérique doit envoyer un message au dispositif centralisé est déterminé selon la formule suivante :
Tempo= t3-t3re où Tempo représente le temps entre l'instant d"envoi du message reçu et le nouvel instant où le périphérique doit envoyer un message au dispositif centralisé, t3re est l'instant de réception du message et t3 est l'instant où le périphérique devait envoyer un message au dispositif centralisé.

4. Procédé selon la revendication 2, **caractérisé en ce que**, si l'écart est supérieur au seuil prédéterminé et si l'instant de réception du message est postérieur à l'instant où le périphérique devait envoyer un message au dispositif centralisé, le nouvel instant où le périphérique doit envoyer un message au dispositif centralisé est déterminé selon la formule suivante :

$$\text{Tempo}= t3+\left\lceil \frac{t3re-t3}{Interv} \right\rceil * \text{Interv}- t3re$$

où $\lceil x \rceil$ est la partie entière par excès de x, t3re est l'instant de réception du message, t3 est l'instant où le périphérique devait envoyer un message au dispositif centralisé et Interv est l'intervalle de temps entre la réception de deux messages envoyés par le périphérique ayant envoyé le message au dispositif centralisé.

5. Procédé selon la revendication 2, **caractérisé en ce que**, si l'écart est inférieur au seuil prédéterminé, le nouvel instant où le périphérique doit envoyer un message au dispositif centralisé est déterminé selon la formule suivante :
Tempo=(t3+Interv-t3re)*(1+(t3-t3re)/Interv) où t3re est l'instant de réception du message, t3 est l'instant où le périphérique devait envoyer un message au dispositif centralisé et Interv est l'intervalle de temps entre la réception de deux messages envoyés par le périphérique ayant envoyé le message au dispositif centralisé.

6. Procédé selon l'une quelconque des revendications 1 à 5, **caractérisé en ce que** le nombre de périphériques est comparé à au moins un seuil prédéterminé parmi trois seuls prédéterminés, et **en ce qu'**une méthode de calcul différente est utilisée pour déterminer l'instant où le périphérique doit envoyer un message au dispositif centralisé selon le résultat de la comparaison du nombre de périphériques au seuil.

7. Procédé selon la revendication 6, **caractérisé en ce que**, parmi trois seuils prédéterminés, un premier seuil égal à un, un second seuil égal à cinq et un troisième seuil égal à dix.

8. Procédé selon l'une quelconque des revendications précédentes, **caractérisé en ce que** le premier intervalle de temps prédéterminé est de deux heures et le second intervalle de temps est de vingt minutes.

9. Dispositif centralisé de gestion de l'accès à une ressource radio par au moins un périphérique, le dispositif centralisé et ledit au moins un périphérique étant des éléments d'un système de surveillance, le dispositif centralisé devant recevoir au moins un message de chaque périphérique dans un premier intervalle de temps prédéterminé et devant recevoir au moins un message d'au moins un périphérique dans un second intervalle de temps préalablement à la mise en surveillance du système de surveillance, le second intervalle de temps étant inférieur au premier intervalle de temps, **caractérisé en ce que** le dispositif centralisé comporte :

- des moyens de détermination, pour chaque périphérique, de l'instant où le périphérique doit envoyer un message au dispositif centralisé à partir des premier, second intervalles de temps prédéterminés et du nombre de périphériques,
- des moyens de détermination, à la réception de chaque périphérique d'un message, d'un nouvel instant où le périphérique doit envoyer un message au dispositif centralisé à partir de l'instant de réception du message et de l'instant où le périphérique devait envoyer un message au dispositif centralisé,
- des moyens de transfert du nouvel instant où le périphérique doit envoyer un message au dispositif centralisé au périphérique ayant envoyé le message reçu.

**Patentansprüche**

1. Verfahren zur Verwaltung, durch eine zentralisierte Vorrichtung, des Zugriffs auf eine Funkressource durch wenigstens ein Peripheriegerät, wobei die zentralisierte Vorrichtung und das wenigstens eine Peripheriegerät Elemente eines Überwachungssystems sind, wobei die zentralisierte Vorrichtung wenigstens eine Nachricht von jedem Peripheriegerät in einem ersten vorbestimmten Zeitintervall empfangen muss und wenigstens eine Nachricht von wenigstens einem Peripheriegerät in einem zweiten Zeitintervall empfangen muss, bevor die Aktivierung des Überwachungssystems erfolgt, wobei das zweite Zeitintervall kürzer als das erste Zeitintervall ist, **dadurch gekennzeichnet, dass** das Verfahren die Schritte umfasst:

   - Bestimmung (E403), für jedes Peripheriegerät, des Zeitpunkts, zu dem das Peripheriegerät eine Nachricht an die zentralisierte Vorrichtung senden soll, aus dem ersten und dem zweiten vorbestimmten Zeitintervall und der Anzahl der Peripheriegeräte,
   - beim Empfang (E404) einer Nachricht von jedem Peripheriegerät, Bestimmung eines neuen Zeitpunkts, zu dem das Peripheriegerät eine Nachricht an die zentralisierte Vorrichtung senden soll, aus dem Zeitpunkt des Empfangs der Nachricht und dem Zeitpunkt, zu dem das Peripheriegerät eine Nachricht an die zentralisierte Vorrichtung senden sollte,
   - Übermittlung (E408, E410) des neuen Zeitpunkts, zu dem das Peripheriegerät eine Nachricht an die zentralisierte Vorrichtung senden soll, an das Peripheriegerät, das die empfangene Nachricht gesendet hat.

2. Verfahren nach Anspruch 1, **dadurch gekennzeichnet, dass** das Verfahren außerdem den Schritt des Vergleichs des Abstands zwischen dem Zeitpunkt des Empfangs der Nachricht und dem Zeitpunkt, zu dem das Peripheriegerät eine Nachricht an die zentralisierte Vorrichtung senden sollte, mit einem vorbestimmten und für die Ungenauigkeit der internen Oszillatoren der Peripheriegeräte repräsentativen Schwellenwert umfasst, und dadurch, dass der neue Zeitpunkt, zu dem das Peripheriegerät eine Nachricht an die zentralisierte Vorrichtung senden soll, in Abhängigkeit vom Ergebnis des Vergleichs bestimmt wird.

3. Verfahren nach Anspruch 2, **dadurch gekennzeichnet, dass**, falls der Abstand größer als der vorbestimmte Schwellenwert ist und falls der Zeitpunkt des Empfangs der Nachricht vor dem Zeitpunkt liegt, zu dem das Peripheriegerät eine Nachricht an die zentralisierte Vorrichtung senden sollte, der neue Zeitpunkt, zu dem das Peripheriegerät eine Nachricht an die zentralisierte Vorrichtung senden soll, gemäß der folgenden Formel bestimmt wird:
   Tempo = t3-t3re, wobei Tempo die Zeit zwischen dem Zeitpunkt des Sendens der empfangenen Nachricht und dem neuen Zeitpunkt, zu dem das Peripheriegerät eine Nachricht an die zentralisierte Vorrichtung senden soll, bezeichnet, t3re der Zeitpunkt des Empfangs der Nachricht ist und t3 der Zeitpunkt ist, zu dem das Peripheriegerät eine Nachricht an die zentralisierte Vorrichtung senden sollte.

4. Verfahren nach Anspruch 2, **dadurch gekennzeichnet, dass**, falls der Abstand größer als der vorbestimmte Schwellenwert ist und falls der Zeitpunkt des Empfangs der Nachricht nach dem Zeitpunkt liegt, zu dem das Peripheriegerät eine Nachricht an die zentralisierte Vorrichtung senden sollte, der neue Zeitpunkt, zu dem das Peripheriegerät eine Nachricht an die zentralisierte Vorrichtung senden soll, gemäß der folgenden Formel bestimmt wird:

$$\text{Tempo} = t3 + \left\lceil \frac{t3re - t3}{Interv} \right\rceil * Interv - t3re,$$

   wobei $\lceil x \rceil$ die kleinste ganze Zahl ist, die größer oder gleich x ist, t3re der Zeitpunkt des Empfangs der Nachricht ist, t3 der Zeitpunkt ist, zu dem das Peripheriegerät eine Nachricht an die zentralisierte Vorrichtung senden sollte, und Interv das Zeitintervall zwischen dem Empfang von zwei Nachrichten ist, die von dem Peripheriegerät gesendet wurden, das die Nachricht an die zentralisierte Vorrichtung gesendet hat.

5. Verfahren nach Anspruch 2, **dadurch gekennzeichnet, dass**, falls der Abstand kleiner als der vorbestimmte Schwellenwert ist, der neue Zeitpunkt, zu dem das Peripheriegerät eine Nachricht an die zentralisierte Vorrichtung senden soll, gemäß der folgenden Formel bestimmt wird:

Tempo = (t3+Interv-t3re)*(1+(t3-t3re)/Interv), wobei t3re der Zeitpunkt des Empfangs der Nachricht ist, t3 der Zeitpunkt ist, zu dem das Peripheriegerät eine Nachricht an die zentralisierte Vorrichtung senden sollte, und Interv das Zeitintervall zwischen dem Empfang von zwei Nachrichten ist, die von dem Peripheriegerät gesendet wurden, das die Nachricht an die zentralisierte Vorrichtung gesendet hat.

6. Verfahren nach einem der Ansprüche 1 bis 5, **dadurch gekennzeichnet, dass** die Anzahl der Peripheriegeräte mit wenigstens einem Schwellenwert von drei vorbestimmten Schwellenwerten verglichen wird, und dadurch, dass je nach dem Ergebnis des Vergleichs der Anzahl der Peripheriegeräte mit dem Schwellenwert ein anderes Berechnungsverfahren angewendet wird, um den Zeitpunkt zu bestimmen, zu dem das Peripheriegerät eine Nachricht an die zentralisierte Vorrichtung senden soll.

7. Verfahren nach Anspruch 6, **dadurch gekennzeichnet, dass** von drei vorbestimmten Schwellenwerten ein erster Schwellenwert gleich eins ist, ein zweiter Schwellenwert gleich fünf ist und ein dritter Schwellenwert gleich zehn ist.

8. Verfahren nach einem der vorhergehenden Ansprüche, **dadurch gekennzeichnet, dass** das erste vorbestimmte Zeitintervall zwei Stunden beträgt und das zweite Zeitintervall zwanzig Minuten beträgt.

9. Zentralisierte Vorrichtung zur Verwaltung des Zugriffs auf eine Funkressource durch wenigstens ein Peripheriegerät, wobei die zentralisierte Vorrichtung und das wenigstens eine Peripheriegerät Elemente eines Überwachungssystems sind, wobei die zentralisierte Vorrichtung wenigstens eine Nachricht von jedem Peripheriegerät in einem ersten vorbestimmten Zeitintervall empfangen muss und wenigstens eine Nachricht von wenigstens einem Peripheriegerät in einem zweiten Zeitintervall empfangen muss, bevor die Aktivierung des Überwachungssystems erfolgt, wobei das zweite Zeitintervall kürzer als das erste Zeitintervall ist, **dadurch gekennzeichnet, dass** die zentralisierte Vorrichtung umfasst:

- Mittel zur Bestimmung, für jedes Peripheriegerät, des Zeitpunkts, zu dem das Peripheriegerät eine Nachricht an die zentralisierte Vorrichtung senden soll, aus dem ersten und dem zweiten vorbestimmten Zeitintervall und der Anzahl der Peripheriegeräte,
- Mittel zur Bestimmung, beim Empfang einer Nachricht von jedem Peripheriegerät, eines neuen Zeitpunkts, zu dem das Peripheriegerät eine Nachricht an die zentralisierte Vorrichtung senden soll, aus dem Zeitpunkt des Empfangs der Nachricht und dem Zeitpunkt, zu dem das Peripheriegerät eine Nachricht an die zentralisierte Vorrichtung senden sollte,
- Mittel zur Übermittlung des neuen Zeitpunkts, zu dem das Peripheriegerät eine Nachricht an die zentralisierte Vorrichtung senden soll, an das Peripheriegerät, das die empfangene Nachricht gesendet hat.

## Claims

1. Method for managing, by a centralized device, access to a radio resource by at least one peripheral, the centralized device and said at least one peripheral being elements of a monitoring system, the centralized device having to receive at least one message from each peripheral in a first predetermined time interval and having to receive at least one message from at least one peripheral in a second time interval prior to the commencement of monitoring of the monitoring system, the second time interval being less than the first time interval, **characterized in that** the method comprises the steps of:

- determining (E403), for each peripheral, the instant at which the peripheral must send a message to the centralized device on the basis of the first and second predetermined time intervals and of the number of peripherals,
- on receipt (E404) of a message from each peripheral, determining a new instant at which the peripheral must send a message to the centralized device on the basis of the instant of receipt of the message and of the instant at which the peripheral should send a message to the centralized device,
- transferring (E408, E410) the new instant at which the peripheral must send a message to the centralized device to the peripheral that sent the message received.

2. Method according to Claim 1, **characterized in that** the method furthermore comprises the step of comparing the disparity between the instant of receipt of the message and the instant at which the peripheral should send a message to the centralized device with a predetermined threshold representative of the inaccuracy of the internal oscillators of the peripherals and **in that** the new instant at which the peripheral must send a message to the centralized device is determined as a function of the result of the comparison.

3. Method according to Claim 2, **characterized in that**, if the disparity is greater than the predetermined threshold and if the instant of receipt of the message is earlier than the instant at which the peripheral should send a message to the centralized device, the new instant at which the peripheral must send a message to the centralized device is determined according to the following formula:
Tempo= t3-t3re where Tempo represents the time between the instant of sending of the message received and the new instant at which the peripheral must send a message to the centralized device, t3re is the instant of receipt of the message and t3 is the instant at which the peripheral should send a message to the centralized device.

4. Method according to Claim 2, **characterized in that**, if the disparity is greater than the predetermined threshold and if the instant of receipt of the message is later than the instant at which the peripheral should send a message to the centralized device, the new instant at which the peripheral must send a message to the centralized device is determined according to the following formula: $\mathtt{Tempo} = \mathtt{t3} + \left\lceil \frac{t3re-t3}{Interv} \right\rceil * \mathtt{Interv-t3re}$ where [x] is

the excess integer part of x, t3re is the instant of receipt of the message, t3 is the instant at which the peripheral should send a message to the centralized device and Interv is the time interval between the receipt of two messages sent by the peripheral that sent the message to the centralized device.

5. Method according to Claim 2, **characterized in that**, if the disparity is less than the predetermined threshold, the new instant at which the peripheral must send a message to the centralized device is determined according to the following formula:
Tempo=(t3+Interv-t3re)*(1+(t3-t3re)/Interv) where t3re is the instant of receipt of the message, t3 is the instant at which the peripheral should send a message to the centralized device and Interv is the time interval between the receipt of two messages sent by the peripheral that sent the message to the centralized device.

6. Method according to any one of Claims 1 to 5, **characterized in that** the number of peripherals is compared with at least one predetermined threshold out of three predetermined thresholds, and **in that** a different calculation scheme is used to determine the instant at which the peripheral must send a message to the centralized device according to the result of the comparison of the number of peripherals with the threshold.

7. Method according to Claim 6, **characterized in that**, out of three predetermined thresholds, a first threshold equal to one, a second threshold equal to five and a third threshold equal to ten.

8. Method according to any one of the preceding claims, **characterized in that** the first predetermined time interval is two hours and the second time interval is twenty minutes.

9. Centralized device for managing access to a radio resource by at least one peripheral, the centralized device and said at least one peripheral being elements of a monitoring system, the centralized device having to receive at least one message from each peripheral in a first predetermined time interval and having to receive at least one message from at least one peripheral in a second time interval prior to the commencement of monitoring of the monitoring system, the second time interval being less than the first time interval, **characterized in that** the centralized device comprises:

- means for determining, for each peripheral, the instant at which the peripheral must send a message to the centralized device on the basis of the first and second predetermined time intervals and of the number of peripherals,
- means for determining, on receipt of a message from each peripheral, a new instant at which the peripheral must send a message to the centralized device on the basis of the instant of receipt of the message and of the instant at which the peripheral should send a message to the centralized device,
- means for transferring the new instant at which the peripheral must send a message to the centralized device to the peripheral that sent the message received.

20a            10            20e

| Périphérique | | Centrale | | Périphérique |

20b

20d

| Périphérique | | | Périphérique |

20c

| Périphérique |

# Fig. 1

10

205            200

| Interface | | Proc | 200 |
| | | ROM | 202 |
| 201 | | RAM | 203 |

# Fig. 2

Fig. 3

Fig. 5

E400 — Lecture paramètres

E401 — Nombre périphériques

E402 — Détermination intervalle entre trame
Détermination temporisation supervision

E403 — Détermination instant émission
Pour chaque périphérique

E404 — Réception trame ?

E405 — Identification périphérique

E406 — Dérive < seuil

E409 — Recalage

E407 — Compensation dérive

E410 — Envoi réponse

E408 — Envoi réponse

E411 — Modification périphérique ?

Fig. 4

672

↓

| | | | | | |
|0| |570| |1140| |1710| | |t|

↔ 1140

1710

# Fig. 6a

1080

↓

|0| |570| |1140| |1710| | |t|

↔ 1140

1710

# Fig. 6b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010202327 A
- US 771614 A